# FASCICULE DE BREVET EUROPEEN

(11) **EP 3 378 601 B1**
(45) Date de publication et mention de la délivrance du brevet: **02.10.2019**
(21) Numéro de dépôt: 18158883.1
(22) Date de dépôt: 27.02.2018
(51) Int. Cl.: B25F 5/00, A01D 46/26, A01D 34/90

(54) **DISPOSITIF À POIGNÉE ET À FILTRE VIBRATOIRE POUR OUTIL MOTORISÉ À PERCHE ET OUTIL POURVU D'UN TEL DISPOSITIF**
VORRICHTUNG MIT GRIFF UND SCHWINGFILTER FÜR MOTORISIERTES WERKZEUG MIT AUSLEGER, UND WERKZEUG, DAS MIT EINER SOLCHEN VORRICHTUNG AUSGESTATTET IST
DEVICE WITH HANDLE AND VIBRATING FILTER FOR POWER TOOL WITH POLE AND TOOL PROVIDED WITH SUCH A DEVICE

(30) Priorité: 21.03.2017 FR 1770279
(43) Date de publication de la demande: 26.09.2018
(73) Titulaire: PELLENC, 84120 Pertuis (FR)
(72) Inventeur: ROLLAND, Christian, 84160 CUCURON (FR)
(74) Mandataire: Weber, Etienne Nicolas

(56) Documents cités:
- EP-A1- 2 050 328
- EP-A1- 2 422 604
- WO-A1-2004/074707

## Description

### Domaine technique

La présente invention concerne un dispositif à poignée pour un outil motorisé portatif, et en particulier un outil à perche. Il s'agit plus précisément d'un dispositif incluant un filtre vibratoire destiné à atténuer les vibrations susceptibles d'être transmises par l'outil à un utilisateur saisissant l'outil par la poignée.

L'invention trouve des applications pour divers outils motorisés portatifs à perche. On entend par outil à perche un outil comportant une tête de travail, un moteur d'actionnement de la tête de travail et une perche, la tête de travail étant positionnée à une extrémité de la perche. L'invention peut notamment être mise en oeuvre pour un outil de récolte de fruits dont la tête de travail est un peigne ou une fourche mobile. Plus généralement elle peut être mise en oeuvre pour un appareil ou un outil avec une perche, qui peut être tenue à la main par un utilisateur, et pourvu d'un organe actif, d'un moteur ou d'un élément de transmission du mouvement, susceptibles de générer des vibrations, et en particulier des vibrations transverses à l'axe de la perche.

### Etat de la technique antérieure

Comme évoqué ci-dessus, l'invention trouve typiquement une application pour l'équipement d'un outil de récolte de fruits à peigne vibrant. Un tel outil est décrit, par exemple par le document suivant :
EP 1 116 432.

Par ailleurs, on connait des outils à perche, pourvus d'un dispositif à poignée équipé d'un filtre vibratoire. De tels outils sont décrits, par exemple dans les documents suivants :
EP 1 020 107
WO 2004/074707
WO 2006/075034

Ces outils, du type à perche, comportent d'une part une tête de travail reliée à une extrémité distale d'une perche de l'outil et d'autre part au moins une poignée. La poignée est reliée au corps de l'outil, et en particulier à une extrémité proximale de la perche de l'outil, par un organe constituant un filtre atténuateur de vibrations. La tête de travail opère des mouvements de va et vient essentiellement dans l'axe de la perche, générant des vibrations le long de la perche. Les mouvements sont générés par un moteur thermique fixé à l'extrémité proximale de la perche. Ainsi les poignées de ces outils sont essentiellement soumises à des vibrations longitudinales dans une direction sensiblement parallèle à l'axe de la perche.

L'utilisateur d'un tel outil le manipule à deux mains. Une première main saisit la poignée de l'extrémité proximale, tandis que l'autre main tient la perche, voire une deuxième poignée disposée sur la perche, à distance de la poignée de l'extrémité proximale.

### Exposé de l'Invention

L'invention part du constat que les poignées et les atténuateurs de vibration des outils à perche connus sont bien adaptés à la filtration des vibrations longitudinales, c'est à dire des vibrations présentant une composante de vibration majoritaire selon un axe parallèle à la perche de l'outil, mais offrent une filtration insuffisante pour des vibrations transverses, c'est-à-dire les vibrations avec une composante majoritaire selon un axe perpendiculaire à la perche de l'outil.

Les vibrations transversales apparaissent pourtant comme particulièrement gênantes notamment pour des outils dont la tête de travail, ou un élément du moteur ou un élément de transmission, effectuent un mouvement vibratoire avec une composante de translation ou d'excentrique, dans une direction perpendiculaire à l'axe de la perche.

De plus, les vibrations transverses sont généralement amplifiées par un bras de levier que constitue la perche de l'outil entre l'élément vibrant et la poignée de saisie de l'outil.

Ces vibrations peuvent être amorties sans trop de gêne sur une faible durée, de l'ordre de quelques dizaines de secondes, directement par les mains de l'utilisateur saisissant une poignée ou la perche de l'outil. En revanche, l'utilisateur ne peut maintenir cette position plusieurs heures durant sans risques de conséquences traumatiques pour la main ou le bras. Or ceci peut être le cas lors d'une utilisation de tels outils pour la récolte des olives, par exemple.

L'invention a ainsi pour but de proposer un dispositif à poignée pour outil motorisé portatif à perche, présentant des propriétés de filtration vibratoires améliorées et en particulier une meilleure filtration des composantes de vibration transversales.

L'invention a également pour but de proposer un outil portatif motorisé à perche, pourvue d'une poignée à filtre vibratoire.

Pour atteindre ces buts, l'invention propose plus précisément un dispositif à poignée pour un outil portatif motorisé à perche comprenant :
- une douille de fixation du dispositif sur la perche, la douille présentant un axe de douille et étant configurée pour un montage coaxial sur la perche selon l'axe de douille,
- une poignée,
- une entretoise entre la douille et la poignée, l'entretoise ménageant un espace de saisie de la poignée, et formant un filtre vibratoire.

Conformément à l'invention, l'entretoise comprend au moins une sangle passant autour de la douille et présentant une flexibilité de déformation perpendiculaire à l'axe de douille supérieure à une flexibilité de déformation parallèle à l'axe de douille.

Dans la description qui suit, le terme flexibilité est compris comme désignant l'inverse d'une rigidité ou d'une raideur.

La douille de fixation présente un passage pour la perche de l'outil, aligné sur l'axe de douille, pour son montage coaxial sur la perche. La douille peut en particulier être une douille cylindrique pour une fixation sur une perche tubulaire de section circulaire. Elle peut aussi présenter une section non circulaire complémentaire à celle de la perche, par exemple une section elliptique, trilobée ou quadrilobée ou une section circulaire avec un ou plusieurs méplats. L'utilisation d'une douille cylindrique et d'une perche de section circulaire permet d'autoriser au besoin une liberté de pivotement du dispositif à poignée autour de l'axe de la perche. Une perche et une douille à section non circulaire peuvent à l'inverse être retenues si l'on souhaite interdire le pivotement. Une perche à section non circulaire peut être retenue notamment pour un élément de perche télescopique, de manière à interdire une rotation inopinée de l'élément de perche télescopique.

La poignée peut être une simple poignée cylindrique ou une poignée ergonomique adaptée à la forme de la main. Elle peut présenter un axe de poignée parallèle à l'axe de douille. Elle peut aussi présenter un axe de poignée formant un angle non nul avec l'axe de douille, par exemple un axe de poignée transversal à l'axe de douille ou incliné vers l'axe de douille.

L'entretoise entre la poignée et la douille a une double fonction. Une première fonction de l'entretoise est de maintenir la poignée à une certaine distance de la douille, et donc de la perche, lorsque le dispositif est monté sur une perche. Cette distance correspond à l'espace de saisie de la poignée, c'est-à-dire un espace nécessaire pour passer la main autour de la poignée, lorsque l'axe de la poignée est parallèle ou incliné par rapport à l'axe de douille.

Il convient de préciser que la distance entre la poignée et la douille, maintenue par l'entretoise, n'est pas nécessairement fixe. Elle peut en effet varier en fonction de mouvements imposés à un outil pourvu du dispositif de poignée, en fonction d'efforts exercés sur la poignée par la main de l'utilisateur ou encore en fonction de contraintes vibratoires. Toutefois, et de préférence, l'entretoise peut présenter une raideur suffisante pour éviter que la main de l'utilisateur ne vienne heurter la perche ou l'entretoise. Cet aspect est encore décrit plus en détail dans la suite du texte.

Une deuxième fonction de l'entretoise est de constituer un filtre vibratoire.

Cette fonction est conférée à l'entretoise par la sangle. L'utilisation du terme sangle ne préjuge en rien de la matière de cet organe mais fait référence à sa forme générale large et plate et à sa flexibilité. La flexibilité est comprise comme l'inverse d'une rigidité.

La sangle présente, par exemple, une section transverse sensiblement rectangulaire avec un rapport de forme élevé, de préférence supérieur à 10. Le rapport de forme est compris ici comme le rapport de la largeur sur l'épaisseur de la sangle.

Dans une réalisation préférée de la poignée, la largeur de la sangle s'étend parallèlement à l'axe de la douille.

La sangle présente une extrémité de liaison à la poignée et une extrémité de liaison à la douille. La partie de sangle comprise entre ces deux extrémités est appelée brin de sangle dans la suite de l'exposé. Entre ces extrémités une longueur, une courbure et/ou une forme particulière du brin de sangle peuvent contribuer à ajuster la flexibilité de la sangle. Le terme "extrémité" désigne ici une partie de la sangle tournée vers la poignée ou vers la douille mais ne préjuge pas de la configuration de la sangle d'un seul tenant ou en demi sangles formées respectivement par les brins de sangles assemblées sur la douille ou sur la poignée.

La flexibilité ou la raideur de la sangle peuvent être ajustées continûment le long de la sangle, par exemple en conférant à la sangle un facteur de forme évolutif. Elles peuvent aussi être ajustées au moyen d'armatures de rigidité. Les armatures de rigidité peuvent se présenter sous la forme d'inserts disposés le long et à l'intérieur de la sangle mais également avoir des formes évoluant le long et à l'extérieur de la sangle. Il s'agit, par exemple, de rainures, de tirants ou de nervures de rigidité. Par extension, une sangle comportant de telles armatures de rigidité sera assimilée au terme général de sangle par la suite.

Comme précisé précédemment, la flexibilité de la sangle n'est pas isotrope. Elle est plus grande perpendiculairement à l'axe de douille que parallèlement à l'axe de douille. Cette particularité confère au filtre vibratoire une aptitude plus grande à filtrer les vibrations transversales. Dans la suite de la description on distingue ainsi une flexibilité longitudinale, et une flexibilité transversale. C'est à dire d'une part une flexibilité pour un mouvement relatif entre la poignée et la douille dans l'axe de la douille et donc dans l'axe d'une perche sur laquelle la douille est fixée, et d'autre part une flexibilité pour un mouvement relatif entre la poignée et la douille perpendiculaire à l'axe de la douille et donc perpendiculaire à l'axe d'une perche sur laquelle la douille est fixée. Le mouvement perpendiculaire s'entend comme incluant toutes les directions dans un plan perpendiculaire à l'axe de douille.

La flexibilité longitudinale et la flexibilité transversale de la sangle peuvent être ajustées par le rapport de forme de la sangle, par la matière utilisée pour la sangle, et par d'éventuelles armatures de rigidité dont la sangle peut être pourvue.

La flexibilité transversale peut en particulier être ajustée en tenant compte d'un spectre de vibration d'un outil auquel le dispositif à poignée peut être accordé en jouant notamment sur la flexibilité transversale.

On considère que la sangle passe autour de la douille, ou entoure la douille, lorsqu'elle passe sur un côté de la douille opposé à la poignée, par rapport à l'axe de douille.

Dans la description qui suit, la référence à une sangle ne préjuge pas du nombre de sangles dont t'entretoise est pourvue. En particulier, et comme décrit plus loin, l'entretoise peut comporter deux sangles respectivement aux extrémités de la poignée.

De préférence, la sangle peut être fixée à la douille sur un côté de la douille opposé à la poignée.

Le côté de la douille opposé à la poignée, s'entend comme la moitié de la douille qui n'est pas tournée vers la poignée.

Le fait de fixer la sangle sur le côté de la douille opposé à la poignée permet de disposer de brins de sangle plus longs, autorisant une meilleure absorption des vibrations, sans pour autant augmenter la distance entre la poignée et la douille.

Il est en effet avantageux de ne pas augmenter la distance entre la poignée et la douille au-delà de l'espacement nécessaire au passage de la main, et de l'espacement nécessaire pour éviter un contact inopiné de la main avec la douille ou la perche d'un outil équipé du dispositif à poignée. En effet, une distance limitée entre la poignée et la douille permet un meilleur contrôle de l'outil et une prise en main plus sûre de l'outil.

Outre de favoriser des sangles plus longues pour une même distance entre la poignée et la douille, la fixation des sangles sur un côté de la douille opposé à la poignée favorise également la transmission d'un mouvement de pivotement exercé par la main de l'utilisateur. Un tel mouvement de pivotement peut avoir pour but de faire pivoter le dispositif à poignée autour de la perche d'un outil équipée du dispositif à poignée, lorsqu'une liberté de pivotement est prévue. Un mouvement de pivotement peut aussi avoir pour but de faire pivoter l'outil dans son ensemble autour de l'axe de la perche, lorsque le dispositif à poignée est rigidement solidaire de la perche.

De préférence, la douille peut comporter au moins une fixation de sangle ménagée à la périphérie de la douille à l'opposé de la poignée, par rapport à l'axe de douille.

La fixation peut être, par exemple, une fixation par pince, une fixation par complémentarité de forme, une fixation par vissage ou encore une fixation au moyen d'une goupille solidaire de la douille et passant par des brides de la sangle.

La fixation, et en particulier la goupille, peut être située dans un plan comprenant l'axe de douille et de préférence passant par l'axe de poignée et l'axe de douille lorsque ceux-ci sont coplanaires.

La sangle peut être réalisée d'une seule pièce, en partant de la poignée, pour revenir à la poignée, ou en partant de la douille pour revenir à la douille. La sangle peut aussi comporter deux demi sangles fixées sur la poignée et se rejoignant sur la fixation de sangle, c'est-à-dire sur la douille. Les demi sangles peuvent être reliées entre elles, par exemple, par la goupille de la fixation de sangle sur la douille.

De manière à augmenter la capacité de la sangle à absorber des vibrations de grande amplitude au niveau de la douille, sans augmenter la distance entre la poignée et la douille, la sangle peut présenter, au voisinage de la douille, un rayon de courbure plus grand que celui de la douille. En particulier, la sangle peut présenter au voisinage de la douille un rayon de courbure moyen R tel que : 1,2 r <R< 20r où r est le rayon de courbure moyen de la douille.

Le rayon de courbure moyen r de la douille est égal au rayon de la douille dans le cas d'une douille à section circulaire.

Le rayon de courbure de la sangle considéré est un rayon de courbure moyen en raison des déformations statiques ou dynamiques susceptibles d'être subies par la sangle. Le rayon de courbure moyen de la sangle au voisinage de la douille correspond sensiblement à son rayon de courbure en l'absence de contraintes et de vibrations. Dans la suite de la description, et par simplification, il est fait référence simplement au rayon de courbure de la sangle.

Le rayon de courbure de la sangle peut être maintenu au voisinage de la douille par une certaine raideur de la sangle. Aussi, la sangle peut présenter, sur sa longueur, une flexibilité ou une rigidité non constantes, pour ne pas affecter les propriétés d'absorption des vibrations.

Dans ces conditions, le contact de la sangle avec la douille est limité au niveau de la fixation de sangle, maintenant ainsi le plus possible à distance la douille de la sangle et autorisant une liberté de mouvement de la douille, et donc de la perche, lors des vibrations sans pour autant solliciter de façon importante la sangle.

En particulier, et comme évoqué précédemment, la sangle, peut comporter des brins de sangle avec des parties d'extrémité fixées respectivement à l'une de la poignée et de la douille, et au moins une partie médiane reliant entre elles les parties d'extrémité, la partie médiane présentant une flexibilité supérieure aux parties d'extrémité.

La flexibilité s'entend ici essentiellement comme la flexibilité de déformation perpendiculaire à l'axe de douille, même si la flexibilité de déformation parallèlement à l'axe de douille peut également être modulée.

En d'autres termes la sangle ou plus précisément les brins de sangles évoqués précédemment peuvent présenter une raideur ou une rigidité plus grande au voisinage de la douille ou de la poignée.

La ou les parties médianes de la sangle peuvent présenter une largeur parallèlement à l'axe de douille inférieure à une largeur parallèlement à l'axe de douille des parties d'extrémité. Ce rétrécissement de la partie médiane peut ainsi contribuer à ajuster sa flexibilité, et notamment de l'augmenter, de manière à disposer d'une flexibilité non uniforme.

Comme évoqué précédemment, la sangle peut encore comporter au moins l'un parmi un tirant et un relief formant raidisseur ou armature de rigidité, et s'étendant entre la poignée et la douille. Il s'agit, par exemple d'un câble intégré dans la sangle, d'une rainure pratiquée dans la sangle ou d'une nervure rapportée sur la sangle. Le ou les reliefs peuvent en particulier être ménagés sur une face principale de la sangle, c'est-à-dire une face de plus grande largeur, s'étendant de préférence parallèlement à l'axe de la douille.

La hauteur du relief, de même que sa largeur, ou encore le nombre de reliefs peuvent être variables le long de la sangle et contribuer également à une flexibilité non uniforme.

Il convient de préciser qu'en dépit d'une éventuelle non uniformité, la flexibilité transversale de la sangle reste supérieure à sa flexibilité longitudinale.

Afin de pouvoir ajuster une position de la poignée sur l'outil en fonction de la morphologie de l'utilisateur, ou en fonction d'une position d'utilisation préférentielle de l'outil, la douille peut être une douille coulissante pourvue d'un verrou de position axiale.

La douille peut ainsi être déplacée le long de la perche de l'outil et verrouillée dans une position retenue.

Le verrou de position axiale peut comporter au moins l'un parmi un manchon à pince, et un verrou indexé. Dans le cas d'un verrou indexé, une broche ou un oeilleton peuvent être retenus notamment comme reliefs d'indexation de forme complémentaire.. Un manchon à pince en revanche permet d'effectuer le verrouillage par frottement sur la surface de la perche et autorise un positionnement non indexé. La combinaison de différents types de verrous peut être envisagée.

La possibilité d'ajustement de la position de la poignée sur une perche d'un outil à perche permet d'adapter l'ergonomie de saisie de l'outil à sa destination ou à une position d'utilisation spécifique. Ces aspects sont encore évoqués dans la suite de la description.

Comme évoqué précédemment, et dans une réalisation particulière et préférée du dispositif de l'invention, l'entretoise peut comporter deux sangles fixées en des parties d'extrémité opposées de la poignée. Cette mesure permet de faciliter le maintien de l'outil par une poignée sensiblement parallèle à l'axe de la perche.

De manière similaire, la douille peut être une pièce unique ou une pièce en deux parties, par exemple.

Ainsi, la douille peut présenter deux parties d'extrémité recevant respectivement les sangles, les parties d'extrémité de la douille étant reliées par au moins un longeron. Le longeron peut s'étendre parallèlement à l'axe de douille, par exemple.

La fonction du longeron est de solidariser les deux parties d'extrémité et de permettre, le cas échéant, leur déplacement de concert le long de la perche d'un outil sans contraindre les sangles.

Bien qu'une légère torsion permanente de la sangle puisse être envisagée, par exemple lorsque la poignée forme un angle avec l'axe de douille, la sangle présente, de préférence, une face principale parallèle à l'axe de douille. On entend par face principale une face de plus grande surface. Dans ce cas, une ligne génératrice de la face principale de la sangle reste parallèle à l'axe de douille dans la boucle que la sangle décrit entre la poignée et la douille et autour de la douille.

De manière à augmenter la tenue de la sangle à l'égard d'une flexion ou d'une torsion, par exemple une torsion susceptible d'être induite selon un axe perpendiculaire à l'axe de douille sous le poids d'un outil recevant le dispositif à poignée, la poignée peut présenter au moins une butée de limitation d'une déformation de la sangle agissant parallèlement à l'axe de douille.

On considère que la butée agit parallèlement à l'axe de la douille lorsqu'elle est susceptible d'appliquer sur la sangle une force de réaction avec une composante majoritaire parallèle à l'axe de la douille.

L'invention propose également un outil motorisé portatif à perche comprenant une perche et au moins un dispositif à poignée tel que décrit ci-dessus et monté coaxialement sur la perche.

La perche peut être formée d'une barre tubulaire de section circulaire ou non. La section de la douille du dispositif à poignée est de préférence ajustée à celle de la perche. On considère que ce dispositif est monté coaxialement sur la perche lorsque l'axe de douille est confondu avec un axe longitudinal de la perche.

Un nombre de dispositifs à poignée supérieur à un, et en particuliers deux dispositifs à poignée peuvent être prévus sur la perche.

Selon une possibilité de réalisation particulière, l'outil peut comporter une tête de travail solidaire d'une extrémité distale de la perche, un premier dispositif à poignée conforme à l'invention ménagé sur la perche en une extrémité proximale de la perche, opposée à l'extrémité distale, et un deuxième dispositif à poignée, conforme à l'invention, ménagé sur la perche entre l'extrémité proximale et l'extrémité distale. Dans ce cas, l'entretoise du premier dispositif à poignée peut présenter de préférence une raideur supérieure à celle de l'entretoise du deuxième dispositif à poignée.

La raideur plus grande du premier dispositif à poignée équivaut à une flexibilité transversale et longitudinale plus faibles des sangles de l'entretoise. Ainsi le premier dispositif à poignée, plus distant de la tête de travail, et moins exposé aux vibrations peut servir essentiellement à supporter le poids de l'outil et à orienter l'outil autour de l'axe de la perche.

A l'inverse, le deuxième dispositif de poignée, plus proche de la tête de travail, et plus exposé aux vibrations, peut présenter une entretoise avec une moindre raideur, qui permet de mieux absorber les vibrations. Le deuxième dispositif de poignée sert alors essentiellement à orienter l'extrémité distale de la perche et la tête de travail.

La raideur de l'entretoise est ajustée par la flexibilité ou raideur des sangles qui la composent.

Selon une réalisation préférée de l'outil, l'entretoise du dispositif à poignée peut présenter une raideur suffisante pour garantir le maintien de l'espace de saisie de la poignée indépendamment d'une position de l'outil portatif, qu'il soit orienté avec sa tête de travail vers le sol, à l'horizontale, vers le ciel ou dans une position inclinée intermédiaire aux positions précédentes.

L'entretoise subit en effet non seulement des contraintes vibratoires dynamiques, mais aussi des contraintes statiques lorsque l'outil est porté par la ou les poignée(s). Ces contraintes statiques sont liées essentiellement au poids de l'outil et, dans une moindre mesure, à l'inertie de l'outil lors des mouvements qui lui sont appliqués par l'utilisateur.

En fonction de l'orientation ou la position dans l'espace de l'outil, les contraintes exercées sur l'entretoise changent d'orientation relative, en raison de la verticalité du poids. Le choix d'une raideur suffisante pour garantir le maintien de l'espace de saisie de la poignée, permet d'éviter que la main de l'utilisateur ne risque de venir inopinément en appui contre la douille ou contre la perche dans certaines positions.

Il convient de noter que la butée de limitation de la déformation de la sangle, mentionnée ci-dessus, peut contribuer à la raideur de l'entretoise et participer à la garantie du maintien de l'espace de saisie de la poignée.

La perche de l'outil peut être une perche d'une seule pièce ou une perche télescopique.

Différentes configurations de l'outil peuvent être envisagées. Outre la perche, l'outil peut comporter un moteur ménagé en une extrémité de la perche, une tête de travail ménagée en une extrémité opposée de la perche, et une transmission entre le moteur et la tête de travail, la transmission comprenant un arbre de transmission coaxial à la perche.

Selon une autre possibilité, déjà évoquée, l'outil peut comporter un moteur et une tête de travail ménagés en une même extrémité de la perche.

L'extrémité de la perche opposée à la tête de travail peut recevoir un dispositif de connexion ou une batterie, associée à un dispositif de commande du moteur lorsque le moteur est un moteur électrique.

La tête de travail peut comporter l'un parmi un peigne mobile, un fléau, un fer de binage et une scie, par exemple. Elle peut aussi comporter un crochet configuré pour appliquer des secousses transverses aux branches.

D'autres caractéristiques et avantages de l'invention ressortent de la description qui suit en référence aux figures des dessins. Cette description est donnée à titre illustratif et non limitatif.

### Brève description des figures

La figure 1 est une vue axiale d'un dispositif à poignée conforme à l'invention.
La figure 2 est une perspective du dispositif à poignée de la figure 1 montée sur une perche.
La figure 3 est une perspective d'un outil portatif motorisé comprenant deux dispositifs à poignée conformes à l'invention.
Les figures 4 et 5 sont des croquis illustrant des positions d'utilisation d'un outil conforme à la figure 3.
La figure 6 est une coupe schématique longitudinale partielle d'un dispositif à poignée, conforme à l'invention, monté sur une perche et illustrant une réalisation particulière d'un verrou de position.
Les figures 7 à 10 sont des coupes schématiques transversales partielles d'un détail d'un dispositif à poignée conforme à l'invention illustrant des possibilités de fixation de sangles.
La figure 11 est une vue latérale partielle d'une poignée et de sangles d'un dispositif à poignée conforme à l'invention.
Les figures 12A, 12B et 12C sont des coupes transversales de sangles de dispositif à poignée conformes à l'invention.

Les figures sont représentées en échelle libre.

### Description détaillée de modes de mise en oeuvre de l'Invention

Dans la description qui suit, des parties identiques, similaires ou équivalentes des différentes figures sont repérées avec les mêmes signes de référence, de manière à faciliter le report d'une figure à l'autre.

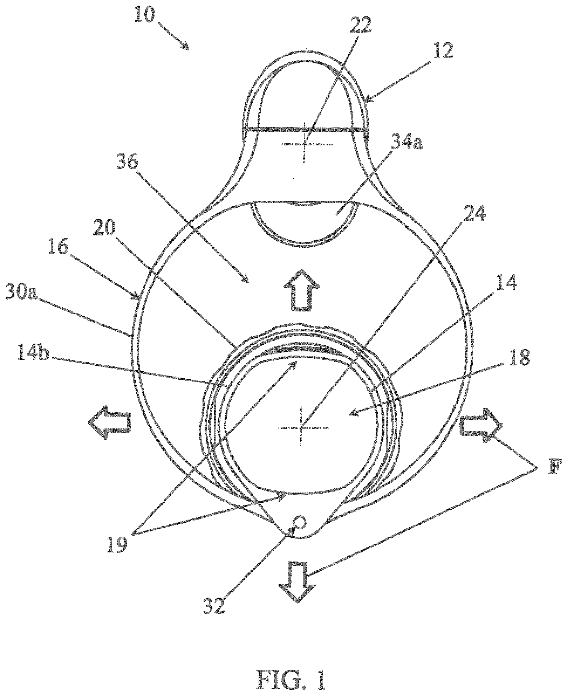

Le dispositif à poignée 10 de la figure 1 comprend une poignée 12 de section sensiblement cylindrique reliée à une douille 14 par l'intermédiaire d'une entretoise 16. La poignée et la douille présentent respectivement un axe de poignée 22 et un axe de douille 24, perpendiculaires à la figure. Dans l'exemple de la figure, l'axe de poignée 22 est parallèle à l'axe de douille 24. Il est toutefois envisageable de donner à l'axe de poignée une inclinaison par rapport à l'axe de la douille, avec un désalignement coplanaire ou non.

La douille 14 présente un passage de perche 18 présentant dans un plan perpendiculaire à l'axe de douille une section sensiblement circulaire avec un premier rayon de courbure et avec des méplats 19 présentant un deuxième rayon de courbure supérieur au premier rayon de courbure. Une partie d'extrémité 14b de la douille 14 présente un prolongement légèrement conique. Elle est pourvue d'un filetage fendu et est coiffée d'un manchon de serrage 20 en prise sur le filetage. Le manchon de serrage 20 permet de réduire légèrement la dimension du passage de perche 18 de la partie d'extrémité 14b de la douille 14 et ainsi de serrer la douille sur une perche à l'instar d'un mandrin. La perche n'est pas représentée sur la figure 1.

L'entretoise 16 comprend une sangle 30a flexible dont seule la tranche est visible sur la figure 1. On peut noter que la sangle est fixée à la poignée 12 de part et d'autre de l'axe de poignée 22 et fait le tour de la douille 14. Une jonction 32 entre la sangle 30a et la douille 14 est située dans un plan contenant l'axe de douille 22 et l'axe de poignée 24. La jonction 32 permet de maintenir localement la sangle 30a de façon tangente à la douille 14. La jonction 32 est située sur un côté de la douille 14 opposé à la poignée 12 par rapport à l'axe de douille 24. L'entretoise 16 présente une longueur suffisante pour ménager entre la poignée 12 et la douille 14 un espace 36 de saisie de la poignée, suffisant pour le passage des doigts d'une main, y compris lors de la majorité des mouvements de la perche lors de son utilisation.

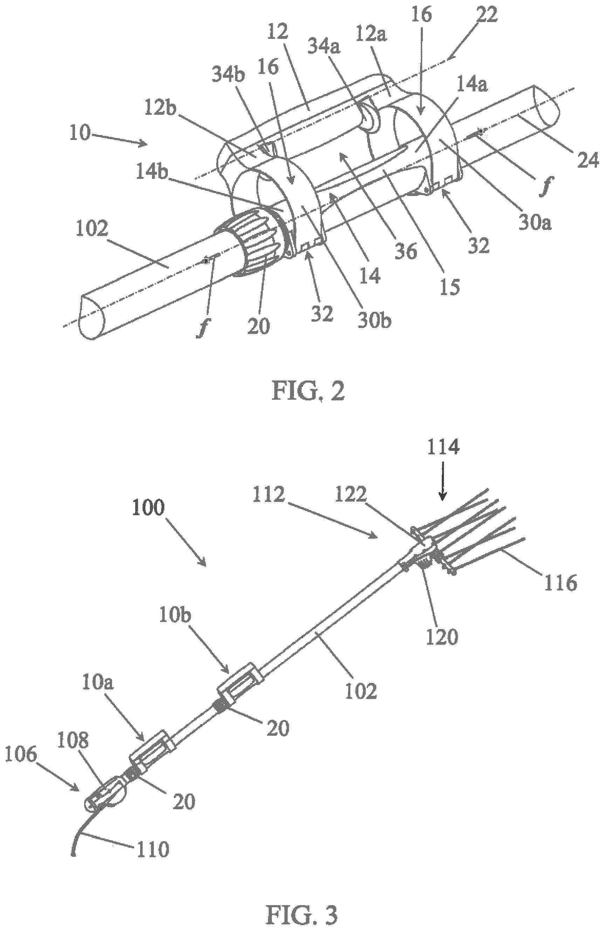

La figure 2 montre que l'entretoise 16 comprend deux sangles flexibles 30a, 30b qui relient respectivement deux parties d'extrémité 12a, 12b de la poignée 12 à deux parties d'extrémité 14a, 14b de la douille 14. Les sangles 30a, 30b ont une largeur, parallèlement à l'axe de douille 24 très supérieure à leur épaisseur. Aussi les sangles présentent-elles un tenseur de flexibilité anisotrope. La flexibilité des sangles dans un sens de déformation accompagnant un mouvement relatif entre la poignée et la douille parallèlement à l'axe de douille 24 est inférieure à une flexibilité des sangles dans un sens de déformation accompagnant un mouvement relatif entre la poignée et la douille perpendiculairement à l'axe de la douille.

La faible flexibilité longitudinale de l'entretoise est indiquée avec des flèches minces f sur la figure 2. Une flexibilité transversale plus grande est indiquée avec des flèches plus épaisses F sur la figure 1. Ces flèches f et F représentent aussi la direction des efforts de vibrations transmis au niveau de la douille par la perche. On peut noter que la flexibilité longitudinale s'entend par rapport à un axe parallèle à l'axe de la douille 24, tandis que la flexibilité transversale s'entend selon un axe quelconque inscrit dans un plan perpendiculaire à l'axe de la douille 24. La flexibilité transversale n'est pas nécessairement isotrope dans ce plan.

Les deux parties d'extrémité 14a, 14b de la douille sont reçues coaxialement sur une perche 102. Elles entourent la perche en présentant avec la section de la perche une complémentarité de forme. La douille 14 et notamment ses parties d'extrémité 14a, 14b, reliées par un longeron 15, présentent une liberté de coulissement sur la perche. Elles ne présentent pas, en revanche, de liberté de rotation autour de la perche 102 en raison d'un méplat de la perche 102 associé au méplat 19 de la douille 14.

La perche 102 présente un axe longitudinal de perche confondu avec l'axe de douille 24.

Des butées 34a, 34b solidaires de la poignée 12 font face respectivement à une tranche des sangles 30a, 30b. La tranche des sangles est comprise comme une face perpendiculaire à la face principale. Les butées peuvent venir en appui sur la sangle parallèlement à l'axe de douille 24 et permettent d'éviter, ou pour le moins de retarder une torsion des sangles 30a, 30b ou une flexion des sangles avec une composante parallèle à l'axe de douille 24. Les butées 34a, 34b protègent aussi la main de l'utilisateur du frottement des sangles pendant les phases vibratoires, et servent de support à la main lors du maintien de l'outil dans des positions inclinées par rapport à la verticale.

La figure 3 montre un outil à perche 100 et plus précisément un outil portable pour la cueillette de petits fruits tels que des olives.

L'outil comprend une perche 102 pourvue de deux dispositifs à poignée 10a, 10b, conformes à l'invention, montés sur la perche 102. Une première extrémité 106 de la perche, dite proximale, comprend une poignée de commande 108 pourvue d'un interrupteur de commande de l'outil et d'une connexion filaire 110 vers une source d'alimentation électrique. Dans une variante non représentée, l'unité d'alimentation 108 peut aussi intégrer une batterie d'accumulateurs pour l'alimentation électrique de l'outil. La poignée de commande 108 peut aussi servir ponctuellement à la manoeuvre de l'outil, notamment par exemple lors de phases de mise en route, d'arrêt ou de transport.

Une deuxième extrémité de la perche 112, dite distale, opposée à la première extrémité 106 reçoit une tête de travail 114 pourvue d'un peigne vibratile 116 utilisable pour secouer des branches d'olivier, par exemple. La deuxième extrémité reçoit également un moteur électrique 120 et une transmission 122 reliant le moteur au peigne vibratile 116.

Le moteur est alimenté en énergie et commandé par la poignée de commande 108. Il y est électriquement relié par des fils électriques parcourant la perche 102. Le moteur électrique 120 et la transmission 122 sont configurés pour conférer au peigne un mouvement vibratoire avec une composante principale transversale à la perche 102. Le mouvement vibratoire est effectué avec une fréquence faible comprise entre 10 et 20Hz, par exemple 13 Hz, propice au détachement des olives des branches.

Un premier dispositif à poignée 10a est monté au voisinage de la première extrémité 106 de la perche 102. Il est destiné essentiellement à supporter le poids de la perche et de la poignée de commande 108. Le deuxième dispositif à poignée 10b est monté plus loin sur la perche, en direction de la deuxième extrémité 112, par exemple au voisinage du milieu de la perche. Il est destiné essentiellement à orienter l'extrémité distale 112 de la perche et la tête de travail 114.

Les dispositifs à poignée 10a, 10b sont pourvus de manchons de serrage 20 qui peuvent être libérés temporairement pour ajuster la position des dispositifs à poignée 10a, 10b, et en particulier la position du deuxième dispositif à poignée, le long de la perche 102. La position relative des deux dispositifs à poignée 10a, 10b peut ainsi s'adapter aisément à la morphologie de l'utilisateur en fonction des phases de travail avec l'outil.

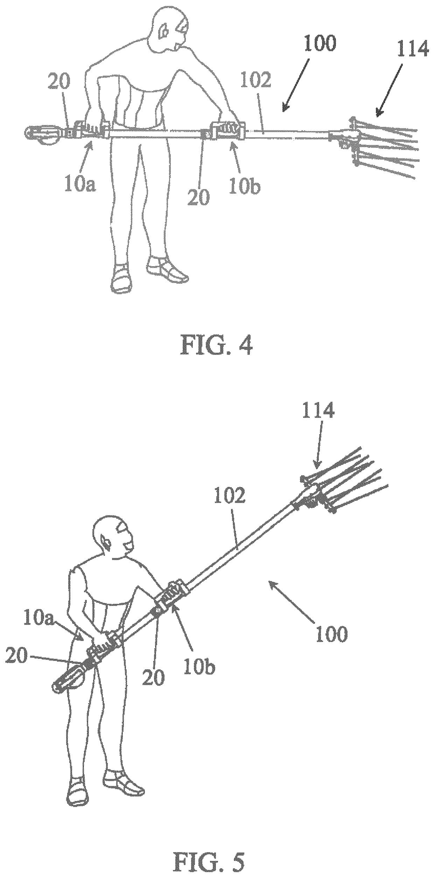

La figure 4 montre une position d'utilisation sensiblement horizontale de l'outil 100.

Le deuxième dispositif à poignée 10b est distant du premier dispositif à poignée 10a et est situé sensiblement à mi- perche.

La figure 5 montre une position d'utilisation de l'outil 100 inclinée vers le haut, par exemple, pour atteindre des branches hautes.

Le deuxième dispositif à poignée 10b est davantage rapproché du premier dispositif à poignée 10a pour faciliter l'orientation de la perche et disposer d'une longueur libre plus importante de la perche.

Le déplacement du deuxième dispositif à poignée est effectué en libérant son manchon de serrage 20. Le serrage du manchon 20 peut aussi être ajusté à un mouvement juste glissant de la poignée de façon à ce que l'utilisateur puisse ajuster aisément sa position en cours de travail sans pour autant avoir à actionner le manchon de serrage.

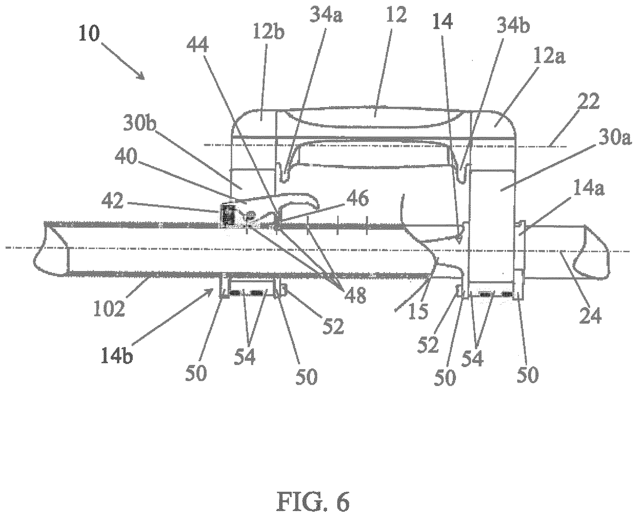

La figure 6 montre un dispositif à poignée 10 conforme à l'invention monté sur une perche 102 d'un outil à perche. On peut distinguer notamment la douille en deux parties 14a, 14b et les sangles 30a, 30b qui s'y rattachent, ainsi que des longerons 15 qui relient les parties d'extrémité 14a, 14b de la douille. Une coupe partielle permet de montrer un verrou indexé à levier basculant 40, chargé par un ressort 42. Le levier basculant 40 comprend une broche 44 avec, à son extrémité, un téton 46. Le téton 46 peut venir en prise dans l'un parmi une pluralité d'oeilletons 48 pratiqués le long de la perche 102. Le verrou permet de fixer ainsi la position du dispositif à poignée le long de la perche et permet également d'interdire une rotation du dispositif à poignée autour de la perche lorsque la perche et la douille présentent des sections circulaires. La figure 6 montre également la fixation des sangles 30a, 30b sur un côté de la douille 14a, 14b, opposée à la poignée 12, par rapport à l'axe de douille 24. Chaque partie de douille 14a, 14b présente des pattes de fixation 50 supportant une goupille 52 qui maintient respectivement la sangle 30a, 30b correspondante. Les sangles présentent dans ce cas des brides 54 traversées par la goupille 52.

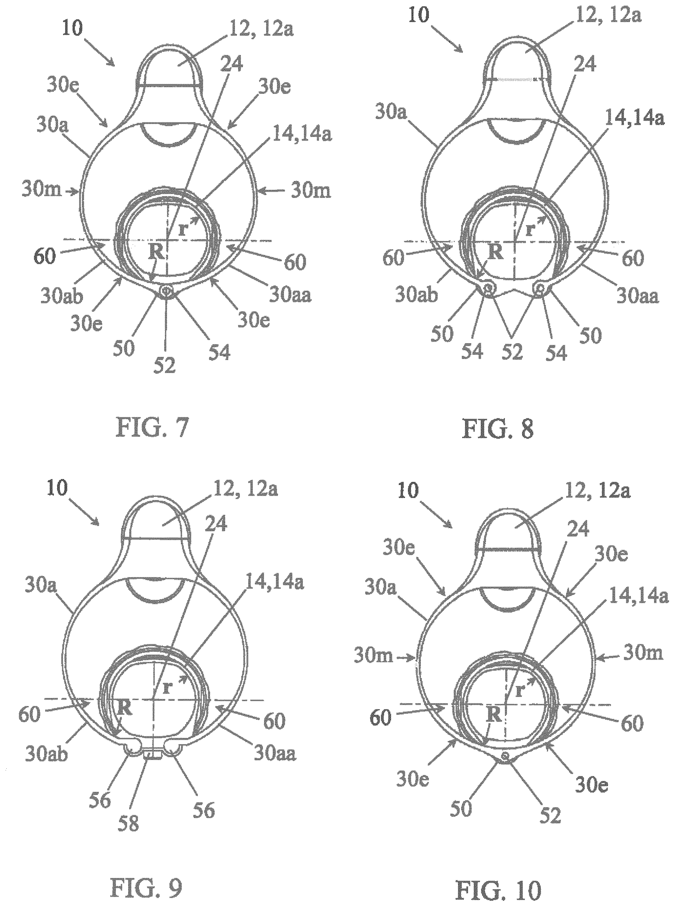

Les figures 7 à 10 sont des coupes d'un dispositif à poignée passant respectivement par une partie d'extrémité 14a de la douille 14. Elles montrent des variantes possibles de la fixation de sangle.

La figure 7 montre une sangle 30a comportant deux demi sangles 30aa et 30ab qui sont formées d'une seule pièce avec la poignée et qui se rejoignent sur la douille 14, à l'opposé de la poignée 12, par rapport à l'axe de douille 24. Les demi sangles 30aa, 30ab sont pourvues de brides 54, traversées par la goupille 52 qui les maintient sur les pattes de fixation 50 de la douille 14. La goupille 52 s'étend parallèlement à l'axe de douille.

On peut observer sur la figure 7, ainsi que sur les figures suivantes, que la sangle 30a est sensiblement tangente à la douille à l'endroit de sa fixation. Elle s'écarte ensuite de la douille 14 en raison d'un rayon de courbure R supérieur au rayon de courbure r de la douille. Un espace de débattement 60 situé latéralement entre la douille 14 et la sangle 30a permet ainsi un mouvement relatif entre la poignée et la douille propre à filtrer les vibrations d'une perche non représentée reçue dans la douille 14.

On peut également observer à la figure 7, et sur les figures suivantes, que la sangle 30a présente des parties d'extrémité 30e au voisinage de la poignée 12 et de la douille 14 présentant une épaisseur plus importante que des parties de sangle médianes 30m. L'épaisseur plus importante au voisinage de la poignée et de la douille confère à la sangle une plus grande raideur dans ces régions. Ceci permet d'éviter que la sangle ne soit appliquée contre la douille sur une partie importante de la périphérie de la douille, mais qu'elle s'en écarte de part et d'autre de la fixation pour ménager l'espace de débattement 60.

A l'inverse, l'épaisseur moindre des parties médianes 30m de la sangle, ou plus précisément des demi sangles 30aa, 30ab permet d'en réduire la raideur, ou à l'inverse d'en augmenter la flexibilité, et notamment la flexibilité transversale, de manière à absorber plus efficacement les vibrations.

Une non uniformité de la raideur ou de la flexibilité des sangles peut aussi être obtenue en leur conférant une largeur non homogène.

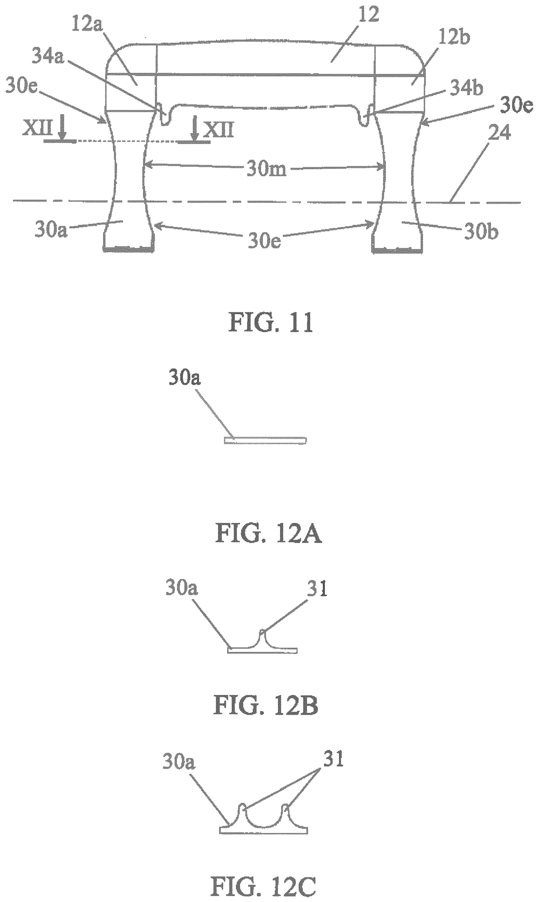

La figure 11 est une vue partielle d'un dispositif de poignée montrant des sangles 30a, et 30b dont la face principale, parallèle à l'axe de douille 24 présente une largeur non uniforme. Elles sont plus larges dans les parties d'extrémité 30e et moins larges dans les parties médianes 30m. La largeur non uniforme participe ainsi également à satisfaire les besoins a priori antagonistes entre le maintien de la forme générale de la sangle et sa flexibilité. La forme des sangles 30a, 30b de la figure 11 peut être comparée notamment à celles de la figure 6 où la largeur des sangles est uniforme.

La figure 11 montre également les butés 34a, 34b susceptible de protéger la main de l'utilisateur d'un contact avec les sangles et éventuellement de limiter une déformation latérale des sangles.

Le dispositif à poignée de la figure 8, s'apparente à celui de la figure 7. Les deux demi sangles 30aa, 30ab partant de la poignée 12 ne se rejoignent toutefois pas. Elles sont reliées chacune à la douille 14 par une fixation qui leur est propre. La fixation est du type à goupille déjà décrite en référence à la figure 7. Une goupille 52 traverse une bride 54 à l'extrémité de chacune des demi sangles 30aa, 30ab tournées vers la douille. Les goupilles maintiennent ainsi les extrémités de sangles sur deux paires de pattes de fixation 50 de la douille 14.

La figure 9 montre une autre fixation, dépourvue de goupilles. Les extrémités des demi sangles 30aa, 30ab présentent respectivement un bourrelet 56 et sont maintenues pincées contre la douille 14 par un étrier vissé 58 qui vient en prise sur les bourrelets 56.

La figure 10 montre un dispositif de fixation ne comprenant pas de demi sangle mais une sangle 30a d'une seule pièce entre ses deux jonctions avec la poignée 12. Le milieu de la sangle 30a, situé sous la douille 14, présente une partie légèrement enflée. Une goupille 52, comparable à celle de la figure 7, traverse cette partie et fixe la sangle 30a à des pattes 50 de la douille.

Les figures 12A, 12B et 12C sont des coupes d'une sangle formant entretoise. Il s'agit, par exemple de coupes selon un plan XII-XII indiqué sur la figure 11. Elles illustrent différents profils de section de la sangle 30a. La sangle peut présenter un profil simplement rectangulaire avec un rapport de forme de sa largeur sur son épaisseur élevé, de manière à présenter une flexibilité longitudinale inférieure, voire très inférieures à sa flexibilité transversale.

La flexibilité globale de la sangle peut être réduite, au moyen d'un relief formant une armature de rigidité. Les figures 12B et 12C montrent respectivement la sangle 30a pourvues d'un tel relief. Il s'agit pour la figure 12B d'une nervure 31 qui parcourt longitudinalement la sangle, et pour la figure 12C d'une double nervure 31. La ou les nervures augmentent la rigidité ou la raideur de la sangle tout en préservant une différence entre la flexibilité longitudinale et transversale. La hauteur ou la largeur des reliefs et en particulier des nervures peut être uniforme ou variable pour conférer une raideur différente aux différentes parties de la sangle.

## Revendications

1. Dispositif à poignée (10, 10a, 10b) pour outil motorisé portatif à perche comprenant :
- une douille (14, 14a, 14b) de fixation du dispositif à poignée sur la perche, la douille (14, 14a, 14b) présentant un axe de douille (24) et étant configurée pour un montage coaxial sur la perche selon l'axe de douille,
- une poignée (12, 12a,12b),
- une entretoise (16) entre la douille et la poignée, l'entretoise ménageant un espace (32) de saisie de la poignée, et formant un filtre vibratoire,
**caractérisé en ce que** l'entretoise (16) comprend au moins une sangle (30a, 30b) passant autour de la douille (14, 14a, 14b) et présentant une flexibilité de déformation perpendiculaire à l'axe de douille (24) supérieure à une flexibilité de déformation parallèle à l'axe de douille (24).

2. Dispositif selon la revendication 1, dans lequel la sangle (30a, 30b) est fixée à la douille (14, 14a, 14b) sur un côté de la douille opposé à la poignée (12, 12a, 12b).

3. Dispositif selon la revendication 2, dans lequel la douille comprend au moins une fixation de sangle (50, 52, 58) ménagée à la périphérie de la douille à l'opposé de la poignée (12, 12a,12b), par rapport à l'axe de douille (24).

4. Dispositif selon la revendication 3, dans lequel la sangle (30a) comprend deux demi sangles (30aa, 30ab) se rejoignant sur la fixation de sangle (50, 52).

5. Dispositif selon l'une quelconque des revendications précédentes, dans lequel la sangle (30a, 30b) présente au voisinage de la douille (14, 14a, 14b) un rayon de courbure moyen R tel que :
1,2 r <R< 20 r où r est le rayon de courbure moyen de la douille.

6. Dispositif selon l'une quelconque des revendications précédentes, dans lequel la sangle (30a, 30b) comprend au moins l'un parmi un tirant et un relief (31) formant raidisseur, et s'étendant entre la poignée et la douille.

7. Dispositif selon l'une quelconque des revendications précédentes, dans lequel la sangle comporte des brins de sangle (30e, 30m) avec des parties d'extrémité (30e) fixées respectivement à l'une de la poignée (12, 12a, 12b) et de la douille (14, 14a, 14b), et au moins une partie médiane (30m) reliant entre elles les parties d'extrémité, la partie médiane (30m) présentant une flexibilité supérieure aux parties d'extrémité (30e).

8. Dispositif selon la revendication 7, dans lequel la partie médiane (30m) présente une largeur parallèlement à l'axe de douille (24) inférieure à une largeur parallèlement à l'axe de douille des parties d'extrémité (30e).

9. Dispositif selon l'une quelconque des revendications précédentes, dans lequel la douille (14, 14a, 14b) est une douille coulissante pourvue d'un verrou de position axiale.

10. Dispositif selon la revendication 9, dans lequel le verrou de position axiale comprend au moins l'un parmi un manchon à pince (20) et un verrou indexé (40, 44, 46, 48).

11. Dispositif selon l'une quelconque des revendications précédentes, dans lequel l'entretoise (16) comprend deux sangles (30a, 30b) fixées en des parties d'extrémité (12a, 12b) opposées de la poignée (12).

12. Dispositif selon la revendication 11, dans lequel la douille (14, 14a, 14b) présente deux parties d'extrémité (14a, 14b) recevant respectivement les sangles (30a, 30b).

13. Dispositif selon l'une quelconque des revendications précédentes, dans lequel la sangle (30a, 30b) présente une face principale parallèle à l'axe de douille (24).

14. Dispositif selon l'une quelconque des revendications précédentes, dans lequel la poignée présente au moins une butée (34a, 34b) de limitation d'une déformation de la sangle (30a, 30b) agissant parallèlement à l'axe de douille.

15. Dispositif selon l'une quelconque des revendications précédentes, dans lequel la poignée présente un axe de poignée (22) parallèle à l'axe de douille (24).

16. Dispositif selon l'une quelconque des revendications 1 à 14, dans lequel la poignée présente un axe (22) de poignée formant un angle non nul avec l'axe de douille (24).

17. Outil motorisé portatif (100) à perche comprenant une perche (102) et au moins un dispositif à poignée (10a, 10b) selon l'une quelconque des revendications précédentes, monté coaxialement sur la perche (102).

18. Outil selon la revendication 17, dans lequel l'entretoise (16) du dispositif à poignée présente une raideur suffisante pour garantir le maintien de l'espace de saisie de la poignée indépendamment d'une position de l'outil portatif (100).

19. Outil selon l'une quelconque des revendications 17 et 18, comprenant une perche télescopique (102).

20. Outil selon l'une des revendications 17 à 19, comprenant une tête de travail (114) solidaire d'une extrémité distale (112) de la perche (102), un premier dispositif à poignée ménagé (10a) sur la perche en une extrémité proximale (106) de la perche, opposée à l'extrémité distale, et un deuxième dispositif à poignée (10b), ménagé sur la perche entre l'extrémité proximale et l'extrémité distale, dans lequel l'entretoise du premier dispositif à poignée (10a) présente une raideur supérieure à celle de l'entretoise du deuxième dispositif à poignée (10b).

21. Outil selon la revendication 20, dans lequel la tête de travail (114) comporte l'un parmi un peigne mobile (116), un crochet, un fléau, un fer de binage et une scie.

## Patentansprüche

1. Vorrichtung mit Griff (10, 10a, 10b) für ein tragbares motorisiertes Werkzeug mit Ausleger, umfassend:
- eine Hülse (14, 14a, 14b) zur Befestigung der Vorrichtung mit Griff an dem Ausleger, wobei die Hülse (14, 14a, 14b) eine Hülsenachse (24) aufweist und für einen koaxialen Anbau an dem Ausleger gemäß der Hülsenachse konfiguriert ist,
- einen Griff (12, 12a.12b),
- ein Zwischenstück (16) zwischen der Hülse und dem Griff, wobei das Zwischenstück einen Griffbereich (32) des Griffs vorsieht und einen Schwingfilter bildet,
**dadurch gekennzeichnet, dass** das Zwischenstück (16) mindestens einen Riemen (30a, 30b) umfasst, der um die Hülse (14, 14a, 14b) verläuft, und eine Verformungselastizität senkrecht zur Hülsenachse (24) aufweist, die größer als eine Verformungselastizität parallel zur Hülsenachse (24) ist.

2. Vorrichtung nach Anspruch 1, wobei der Riemen (30a, 30b) an der Hülse (14, 14a, 14b) auf einer Seite der Hülse, die dem Griff (12, 12a, 12b) gegenüberliegt, befestigt ist.

3. Vorrichtung nach Anspruch 2, wobei die Hülse mindestens eine Riemenhalterung (50, 52, 58) umfasst, die am Umfang der Hülse gegenüber dem Griff (12, 12a, 12b) in Bezug auf die Hülsenachse (24) vorgesehen ist.

4. Vorrichtung nach Anspruch 3, wobei der Riemen (30a) zwei Halbriemen (30aa, 30ab) umfasst, die an der Riemenhalterung (50, 52) wieder zusammenkommen.

5. Vorrichtung nach einem der vorstehenden Ansprüche, wobei der Riemen (30a, 30b) in der Nähe der Hülse (14, 14a, 14b) einen mittleren Krümmungsradius R wie folgt aufweist:
1,2 r<R<20 r, wobei r der mittlere Krümmungsradius der Hülse ist.

6. Vorrichtung nach einem der vorstehenden Ansprüche, wobei der Riemen (30a, 30b) mindestens eines aus einer Strebe oder einer Erhabenheit (31) umfasst, das eine Versteifung bildet und sich zwischen dem Griff und der Hülse erstreckt.

7. Vorrichtung nach einem der vorstehenden Ansprüche, wobei der Riemen Riemenstränge (30e, 30m) mit Endabschnitten (30e), die jeweils an dem einem aus dem Griff (12, 12a, 12b) und der Hülse (14, 14a, 14b) befestigt sind, und mindestens einen mittleren Teil (30m) umfasst, der die Endabschnitte miteinander verbindet, wobei der mittlere Teil (30m) eine höhere Elastizität als die Endabschnitte (30e) aufweist.

8. Vorrichtung nach Anspruch 7, wobei der mittlere Teil (30m) eine Breite parallel zur Hülsenachse (24) unter einer Breite parallel zur Hülsenachse der Endabschnitte (30e) aufweist.

9. Vorrichtung nach einem der vorstehenden Ansprüche, wobei die Hülse (14, 14a, 14b) eine verschiebbare Hülse ist, die mit einem axialen Positionsriegel ausgestattet ist.

10. Vorrichtung nach Anspruch 9, wobei der axiale Positionsriegel mindestens eines aus einer Klemmmuffe (20) und einem Riegel mit Rasten (40, 44, 46, 48) umfasst.

11. Vorrichtung nach einem der vorstehenden Ansprüche, wobei das Zwischenstück (16) zwei Riemen (30a, 30b) umfasst, die an gegenüberliegenden Endabschnitten (12a, 12b) des Griffs (12) befestigt sind.

12. Vorrichtung nach Anspruch 11, wobei die Hülse (14, 14a, 14b) zwei Endabschnitte (14a, 14b) aufweist, die jeweils die Riemen (30a, 30b) aufnehmen.

13. Vorrichtung nach einem der vorstehenden Ansprüche, wobei der Riemen (30a, 30b) eine Hauptfläche parallel zur Hülsenachse (24) aufweist.

14. Vorrichtung nach einem der vorstehenden Ansprüche, wobei der Griff mindestens einen Begrenzungsanschlag (34a, 34b) einer Verformung des Riemens (30a, 30b) aufweist, der parallel zur Hülsenachse wirkt.

15. Vorrichtung nach einem der vorstehenden Ansprüche, wobei der Griff eine Griffachse (22) parallel zur Hülsenachse (24) aufweist.

16. Vorrichtung nach einem der Ansprüche 1 bis 14, wobei der Griff eine Griffachse (22) aufweist, die einen Winkel ungleich Null mit der Hülsenachse (24) bildet.

17. Tragbares motorisiertes Werkzeug (100) mit Ausleger, umfassend einen Ausleger (102) und mindestens eine Vorrichtung mit Griff (10a, 10b) nach einem der vorstehenden Ansprüche, die koaxial an dem Ausleger (102) angebaut ist.

18. Werkzeug nach Anspruch 17, wobei das Zwischenstück (16) der Vorrichtung mit Griff eine ausreichende Steifigkeit aufweist, um die Aufrechterhaltung des Griffbereichs des Griffs unabhängig von einer Position des tragbaren Werkzeugs (100) sicherzustellen.

19. Werkzeug nach einem der Ansprüche 17 und 18, umfassend einen Teleskopausleger (102).

20. Werkzeug nach einem der Ansprüche 17 bis 19, umfassend einen Arbeitskopf (114), der fest mit einem distalen Ende (112) des Auslegers (102) verbunden ist, eine erste Vorrichtung mit Griff (10a), die an dem Ausleger an einem proximalen Ende (106) des Auslegers, gegenüber dem distalen Ende, vorgesehen ist, und eine zweite Vorrichtung mit Griff (10b), die an dem Ausleger zwischen dem proximalen Ende und dem distalen Ende vorgesehen ist, wobei das Zwischenstück der ersten Vorrichtung mit Griff (10a) eine höhere Steifigkeit als diejenige des Zwischenstücks der zweiten Vorrichtung mit Griff (10b) aufweist.

21. Werkzeug nach Anspruch 20, wobei der Arbeitskopf (114) eines aus einem beweglichen Kamm (116), einem Haken, einem Dreschflegel, einem Hackmesser und einer Säge beinhaltet.

## Claims

1. A handle device (10, 10a, 10b) for a portable power tool with a pole comprising:
- a sleeve (14, 14a, 14b) for fixing the handle device to the pole, the sleeve (14, 14a, 14b) having a sleeve axis (24) and being configured for coaxial mounting on the pole along the sleeve axis,
- a handle (12, 12a, 12b), and
- a spacer (16) between the sleeve and the handle, the spacer providing a space (32) for gripping the handle and forming a vibration filter,
**characterised in that** the spacer (16) comprises at least one strap (30a, 30b) passing around the sleeve (14, 14a, 14b) and having deformation flexibility perpendicular to the sleeve axis (24), that is greater than the deformation flexibility parallel to the sleeve axis (24).

2. A device according to claim 1 wherein the strap (30a, 30b) is fixed to the sleeve (14, 14a, 14b) on a side of the sleeve, that is opposite to the handle (12, 12a, 12b).

3. A device according to claim 2 wherein the sleeve comprises at least one strap fixing (50, 52, 58) provided at the periphery of the sleeve In opposite relationship to the handle (12, 12a, 12b) with respect to the sleeve axis (24).

4. A device according to claim 3 wherein the strap (30a) comprises two half-straps (30aa, 30ab) which meet on the strap fixing (50, 52).

5. A device according to any one of the preceding claims wherein the strap (30a, 30b) in the vicinity of the sleeve (14, 1a, 14b) is of a mean radius of curvature (R) such that:
1.2 r < R < 20 r wherein r is the mean radius of curvature of the sleeve.

6. A device according to any one of the preceding claims wherein the strap (30a, 30b) comprises at least one from a tie rod and a relief (31) forming a stiffening means and extending between the handle and the sleeve.

7. A device according to any one of the preceding claims wherein the strap comprises strap legs (30e, 30m) with end portions (30a) respectively fixed to one of the handle (12, 12a, 12b) and the sleeve (14, 14a, 14b), and at least one central portion (30m) connecting the end portions together, the central portion (30m) being of a flexibility greater than the end portions (30e).

8. A device according to claim 7 wherein the central portion (30m) is of a width parallel to the sleeve axis (24), that is less than a width parallel to the sleeve axis of the end portions (30e).

9. A device according to any one of the preceding claims wherein the sleeve (14, 14a, 14b) is a sliding sleeve provided with an axial positioning lock.

10. A device according to claim 8 wherein the axial positioning lock comprises at least one from a gripping sleeve member (20) and an indexed lock (40, 44, 46, 48).

11. A device according to any one of the preceding claims wherein the spacer (16) comprises two straps (30a, 30b) fixed at opposite end portions (12a, 12b) of the handle (12).

12. A device according to claim 11 wherein the sleeve (14, 14a, 14b) has two end portions (14a, 14b) respectively receiving the straps (30a, 30b).

13. A device according to any one of the preceding claims wherein the strap (30a, 30b) has a main face parallel to the sleeve axis (24).

14. A device according to any one of the preceding claims wherein the handle has at least one abutment (34a, 34b) for limiting a deformation of the strap (30a, 30b) acting parallel to the sleeve axis.

15. A device according to any one of the preceding claims wherein the handle has a handle axis (22) parallel to the sleeve axis (24).

16. A device according to any one of claims 1 to 14 wherein the handle has a handle axis (22) forming a non-zero angle with the sleeve axis (24).,

17. A portable power pole tool (100) comprising a pole (102) and at least one handle device (10a, 10b) according to any one of the preceding claims, that is mounted coaxially on the pole (102).

18. A tool according to claim 17 wherein the spacer (16) of the handle device is of sufficient stiffness to guarantee that the space for gripping the handle is maintained independently of a position of the portable tool (100).

19. A tool according to any one of claims 17 and 18 comprising a telescopic pole (102).

20. A tool according to one of claims 17 to 19 comprising a work head (114) fixed with respect to a distal end (112) of the pole (102), a first handle device (10a) provided on the pole at a proximal end (106) of the pole, opposite to the distal end, and a second handle device (10b) provided on the pole between the proximal end and the distal end, wherein the spacer of the first handle device (10a) is of a stiffness greater than that of the spacer of the second handle device (10b).

21. A tool according to claim 20 wherein the work head (114) comprises one from a moveable comb (116), a hook member, a flail, a hoeing tool and a saw.
